**Europäisches Patentamt**

**European Patent Office**

**Office européen des brevets**

(11) Veröffentlichungsnummer: **0 113 875**
**B1**

(12) # EUROPÄISCHE PATENTSCHRIFT

(45) Veröffentlichungstag der Patentschrift:
**20.11.86**

(51) Int. Cl.⁴: **F 16 K 1/22**

(21) Anmeldenummer: **83112514.1**

(22) Anmeldetag: **13.12.83**

(54) **Zentrische Absperrklappe.**

(30) Priorität: **11.01.83 DE 3300635**

(43) Veröffentlichungstag der Anmeldung:
**25.07.84 Patentblatt 84/30**

(45) Bekanntmachung des Hinweises auf die Patenterteilung:
**20.11.86 Patentblatt 86/47**

(84) Benannte Vertragsstaaten:
**AT BE CH FR GB IT LI LU NL SE**

(56) Entgegenhaltungen:
**DE - A - 2 460 182**
**DE - A - 2 533 155**
**DE - B - 1 290 395**
**DE - B - 2 444 264**
**GB - A - 1 210 401**

(73) Patentinhaber: **Klein, Schanzlin & Becker Aktiengesellschaft, Johann-Klein-Strasse 9, D-6710 Frankenthal (DE)**

(72) Erfinder: **Bachmann, Ludwig, Richard-Wagner-Ring 8 c, D-6710 Frankenthal 5 (DE)**
Erfinder: **Ruckert, Heinz-Jürgen, Friedensstrasse 21, D-6711 Grossniedesheim (DE)**

(74) Vertreter: **Furkert, Diethelm, Klein, Schanzlin & Becker Aktiengesellschaft, PFL Postfach 225, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Absperrklappe gemäss dem Oberbegriff des Hauptanspruches.

Zentrische Absperrklappen, bei denen die Drehachse der Klappenscheibe in der Ebene der Gehäusedichtfläche liegt, finden vermehrt Anwendung, da aufgrund der Anwendung findenden Elastomerauskleidungen eine zuverlässige Abdichtfunktion verwirklicht werden kann. Allgemein weisen Kunststoffe eine hohe Beständigkeit gegen viele Durchflussmedien auf und schützen somit die metallischen Teile zuverlässig gegen Korrosion und entsprechende Beeinträchtigungen.

Um Bearbeitungskosten zu verringern, haben sich einteilige Gehäuse durchgesetzt, da bei den mehrteiligen Ausführungen die vom Druck beaufschlagten Teilebenen eine besondere Bearbeitung erfordern. Bekannte Lösungen der einteiligen Gehäuseausführung erfordern eine einteilige Antriebswelle, welche eine zusätzliche Versperrung des Durchströmquerschnittes bedingt. Werden dann die in der Strömung befindlichen Teile noch mit Kunststoffen überzogen, so bedingt dies im geöffneten Zustand eine weitere Verengung des Durchströmquerschnittes. Eine derartige Klappenkonstruktion ist beispielsweise in der DE-B-1 290 395 dargestellt.

Der Erfindung liegt die Aufgabe zugrunde, eine mit Kunststoffen leicht zu beschichtende strömungsgünstige Absperrklappe zu entwickeln, die die geschilderten Nachteile nicht aufweist.

Die Lösung dieser Aufgabe erfolgt gemäss dem kennzeichnenden Teil des Hauptanspruches und weist mehrere Vorteile auf. Beispielsweise kann die metallische Klappenscheibe auch bei kleinen Nennweiten als einfaches Gussteil ohne Kern hergestellt werden, wobei trotzdem die mechanische Bearbeitung der die Antriebswelle aufnehmenden Lagerstellen auf ein Minimum reduzierbar ist. Bei der Beschichtung der Klappenscheibe wird der für die Abdichtungsleistung notwendige Aussendurchmesser mit der für die Beschichtung notwendigen Pressform erlangt. Da jedoch die Antriebswelle ein Bauteil mit definierten geringen Toleranzen ist, kann im Bereich der Aussparung die Beschichtung für die später einzubringende Antriebswelle so dünn wie möglich gehalten werden und damit die Verengung des Strömungsquerschnittes in Offenstellung stark reduziert werden. Die im Gehäuse im Bereich der die Antriebswelle aufnehmenden Wellenlager angebrachten Durchtrittsöffnungen haben den Vorteil, dass hierdurch ein zuverlässiges Beschichten des gesamten Innenraumes des Gehäuses möglich wird. Vor dem Beschichtungsvorgang werden die Wellenlager in das Gehäuse eingelegt und durch einen der Antriebswelle entsprechenden Dorn in ihrer Position gehalten. Während des Beschichtungsvorganges kann der flüssige Elastomer ungehindert an den Wellenlagern vorbeifliessen und sich gleichmässig im Innern des Gehäuses verteilen. Gleichzeitig werden dabei die Wellenlager fest mit dem Gehäuse verbunden.

Eine Ausgestaltung der Erfindung sieht vor, dass die Aussenseite der die Antriebswelle aufnehmenden Wellenlager und/oder die die Wellenlager aufnehmenden Gehäusebohrungen konisch ausgebildet sind.

Diese Form kann beispielsweise bei der Gehäuseherstellung mit vorgegossen werden und hat den Vorteil, dass beim Beschichtungsvorgang mit einem entsprechenden Werkzeugdorn der Wellenlager in die Gehäusebohrungen gepresst werden und von dem Kunststoff in ihrer Position gehalten werden. Aufgrund der konischen Form von Bohrung oder Wellenlager findet eine gewollte Linienberührung zwischen dem Gehäuse und dem Wellenlager statt, so dass eine Übertragung der durch den Flüssigkeitsdruck bedingten Querkraft von der Antriebswelle auf das Gehäuse erfolgt.

Eine andere Ausgetaltung der Erfindung sieht vor, dass die Wellenlager aus Keramik bestehen, Bestandteil des für die Gehäuseherstellung notwendigen Gusskernes sind und in das Gehäuse mit eingegossen werden. Die Keramiklager sind in der Lage, die beim Giessen des Gehäuses anfallende Temperatur zu überstehen und erfordern keine weitere Nacharbeit. Die eigentliche Lagerbohrung ist mit Kernsand gefüllt, der nach dem Guss mit ausgeformt wird und die Bohrung freigibt.

Die Erfindung ist in einem Ausführungsbeispiel dargestellt und wird im folgenden näher beschrieben. Es zeigen

Fig. 1 die bekannte bisher übliche Ausführungsform;

Fig. 2 die erfindungsgemässe Ausführungsform im Schnitt;

Fig. 3 einen Schnitt durch den das Wellenlager tragenden Gehäusehals, und

Fig. 4 und 5 konische Gehäusebohrungen bzw. konisch ausgebildete Wellenlager.

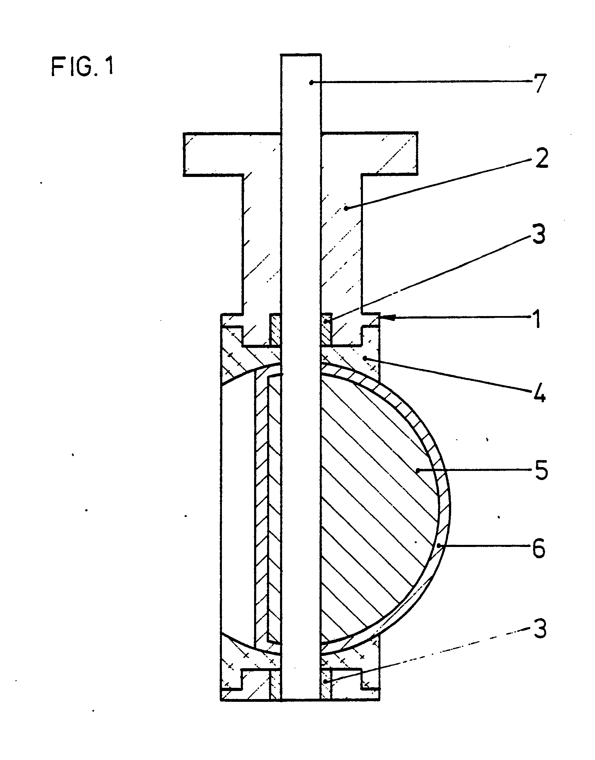

In Fig. 1 ist im Schnitt eine der bekannten üblichen Absperrklappen dargestellt, bestehend aus dem Gehäuse 1, dem Gehäusehals 2, den Wellenlagern 3 und der Gehäusebeschichtung 4. Die hier in der linken Ansicht in Geschlossenstellung und in der rechten Ansicht in Offenstellung gezeigte metallische Absperrscheibe 5 ist ebenfalls mit einer Kunststoffbeschichtung 6 versehen und wird in ihrer Position durch die hindurchgesteckte Antriebswelle 7 gehalten. Falls die metallische Klappenscheibe 5 als einstückiges Gussteil ausgebildet ist, muss die für die Aufnahme der Antriebswelle 7 notwendige Bohrung bei kleinen Nennweiten spanabhebend erstellt werden und erfordert somit einen hohen Aufwand. Bei grösseren Nennweiten wäre ein spezieller Kern erforderlich, welcher wiederum den Aufwand vergrössern würde.

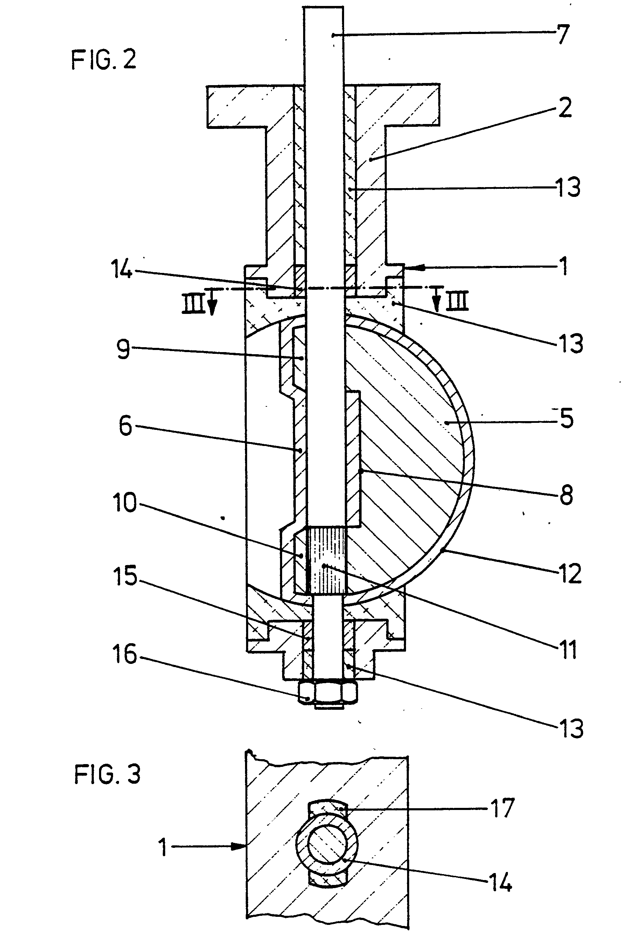

In Fig. 2 ist eine erfindungsgemäss gestaltete Absperrklappe dargestellt, wobei die linke Hälfte der Klappenscheibe wiederum in Geschlossenstellung gezeigt ist, während die rechte Hälfte der Klappenscheibe in Offenstellung gezeigt ist. Das Mittelstück der metallischen Klappenscheibe 5 ist im Bereich der Antriebswelle 7 mit einer Aussparung 8 versehen, und im Umfangsbereich der Klappenscheibe 5 sind zwei einander gegenüberliegende Lagerstellen 9, 10 angeordnet. Die in diesem Beispiel obere Lagerstelle 9 weist eine einfache Durchgangsbohrung auf, während die hier untere Lagerstelle 10 mit einer Kerbverzahnung 11 versehen ist, welche mit einer entsprechenden Kerbverzahnung auf der Welle 7 zusammenwirkt und die sichere Drehbewegung der Klappenscheibe 5 gewährleistet. Aufgrund der Aussparung 8 kann die mechanische Bearbeitung im Bereich der Lagerstellen 9 und 10 minimiert werden, welches eine bedeutende Verringerung des Herstellungsaufwandes darstellt. Bei der Beschichtung der metallischen Klappenscheibe 5 wird innerhalb der Pressform der für die Abdichtung massgebliche und genau definierte Aussendurchmesser 12 erlangt. Während des Beschichtungsvorgangs wird in die Form ein der Antriebswelle 7 entsprechender Dorn eingelegt und die Aussparung 8 vollständig mit Kunststoff 6 ausgefüllt. Somit erfolgt gegenüber der in Fig. 1 gezeigten bisherigen Ausführungsform in der Offenstellung der Klappenscheibe eine erhebliche Verminderung der Strömungsquerschnittsverengung. Denn es braucht nur die Antriebswelle 7 mit einer dünnen Schicht Kunststoff 6 überzogen zu werden. Es ist von der Nennweite und den Kräfteverhältnissen innerhalb der Absperrklappe abhängig, ob die Verzahnung 11 in die obere oder untere Lagerstelle verlegt wird.

Das Gehäuse 1 ist innen vollständig mit Elastomer 13 beschichtet, wobei die Elastomere auch die Wellenlager 14, 15 in ihrer Position halten. Bei der Montage wird in das beschichtete Armaturengehäuse 1 die beschichtete Klappenscheibe 5 eingebracht, die Bohrungen zueinander ausgerichtet und durch Hindurchstecken der Antriebswelle 7 die Teile in ihrer Lage fixiert. Die Mutter 16 verhindert, dass die Antriebswelle 7 ihre Lage verändern kann.

Fig. 3 entspricht dem Schnitt III–III aus Fig. 2 und zeigt die Durchtrittsöffnungen 17, die neben den Wellenlagern 14, 15 innerhalb des Gehäuses angebracht sind. Aufgrund dieser Durchtrittsöffnungen 17 kann während des Beschichtungsvorganges das flüssige Elastomer ungehindert um die Wellenlager 14, 15 herumströmen und diese vollständig einhüllen. Die Durchtrittsöffnungen sind in Richtung quer zur Strömungsrichtung angeordnet, damit die durch die Klappenscheibe bedingten Querkräfte zuverlässig auf das Gehäuse übertragen werden können.

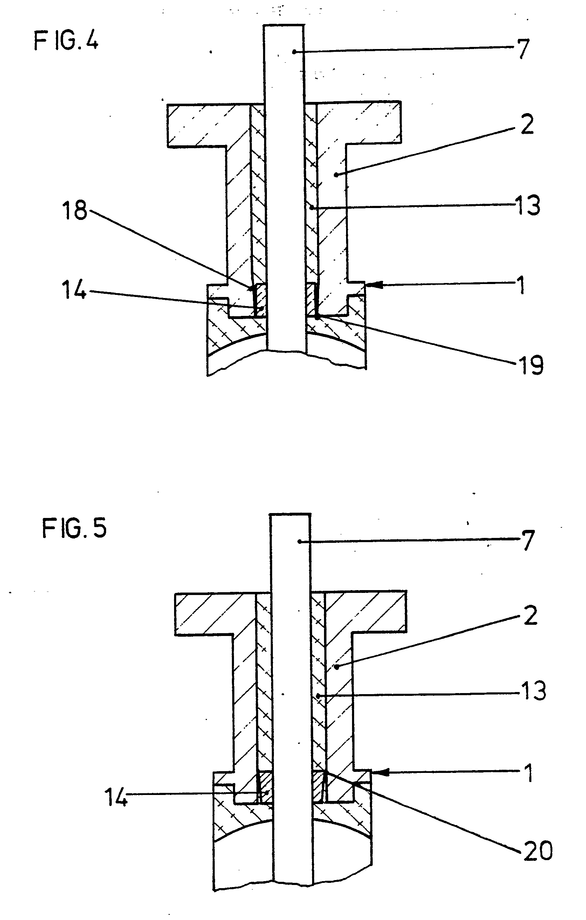

Fig. 4 zeigt einen Gehäusehals 2, der im Bereich des Wellenlagers 14 eine konische Gehäusebohrung 18 aufweist, die im Bereich ihres kleinsten Querschnittes 19 eine Linienberührung zwischen Gehäuse 1 und dem Wellenlager 14 sicherstellt.

Die Fig. 5 zeigt ein aussen konisch verlaufendes Wellenlager 14, das im grössten Durchmesser 20 eine Linienberührung mit dem Gehäuse 1 erlangt.

## Patentansprüche

1. Absperrklappe, bestehend aus einem einteiligen metallischen Gehäuse (1), dessen gesamter Innenraum mit einer Elastomerbeschichtung (13) versehen ist, einer zentrisch gelagerten metallischen Klappenscheibe (5), welche von einer Kunststoffbeschichtung (6) ummantelt ist, einer einteiligen Antriebswelle (7), welche durch die Klappenscheibe (5) hindurchgesteckt wird, durch eine Mitnehmerverbindung (11) mit der Klappenscheibe (5) in Verbindung steht und teilweise von der Elastomerbeschichtung (15) des Gehäuses umgeben ist, einem oberen und einem unteren Wellenlager (14, 15) in dem Gehäuse angeordnet für die Aufnahme der Antriebswelle (7), dadurch gekennzeichnet, dass die Klappenscheibe (5) einstückig ausgebildet ist, dass im Bereich der Antriebswelle (7) das metallische Mittelstück (8) der Klappenscheibe (5) ausgespart ist, so dass im Umfangsbereich der Klappenscheibe (5) zwei einander gegenüberliegende Lagerstellen (9, 10) für die Aufnahme der Antriebswelle verbleiben, dass während des Beschichtungsvorganges der Klappenscheibe (5) die Aussparung (8) vollständig mit dem Kunststoff (6) ausgefüllt wird, und dass Durchtrittsöffnungen (17) für flüssiges Elastomer im Bereich der beiden Wellenlager (14, 14) im Gehäuse versehen sind, welche in Richtung der Achse der Antriebswelle (7) verlaufen, so dass während des Beschichtungsvorganges des Gehäuses (1) das flüssige Elastomer um die Wellenlager (14, 15) herumströmt und die Wellenlager einhüllt.

2. Absperrklappe nach Anspruch 1, dadurch gekennzeichnet, dass die Aussenseite der die Antriebswelle aufnehmenden Wellenlager (14, 15) und/oder die die Wellenlager aufnehmenden Gehäusebohrungen (18, 20) konisch ausgebildet sind.

3. Absperrklappe nach den Ansprüchen 1 und 2, dadurch gekennzeichnet, dass die Wellenlager (14) aus Keramik bestehen, Bestandteil des für die Gehäuseherstellung notwendigen Gusskernes sind und in das Gehäuse mit eingegossen werden.

## Claims

1. Shutoff flap, comprising one one-piece metallic housing (1), the entire interior area of which is provided with an elastomer coating (13), a centrally supported metallic flap disc (5), which is within a plastic coating (6), a one-piece actuation shaft (7), which is inserted through the flap disc (5), is connected to the flap disc (5) by means of a drive type fastening (11) and is partly surrounded by the elastomer coating (15) of the housing, an upper and a lower shaft bearing (14, 15) which are located in the housing and serve to accomodate the actuation shaft (7); identified by the fact that the flap disc (5) is designed in one piece, that the central metallic piece (8) of the flap disc (5) is cut out in the area of the actuation shaft (7), thus leaving two opposite bearing points (9, 10) in the circumference area of the flap disc (5) for accomodation of the actuation shaft; that, during the coating process of the flap disc (5), the cutout (8) is completely filled with the plastic (6), and that in the area of the two shaft bearings (14, 15) passage ports are (17) provided in the housing for fluid elastomer; these ports running in the direction of the axis of the acutation shaft (7) so that the fluid elastomer flows around the shaft bearings (14, 15) during the coating process of the housing (1) and covers the shaft bearings.

2. Shutoff flap acc. to claim 1, identified by the fact that the outside of the shaft bearings (14, 15) accomodating the acutation shaft and/or the housing borings (18, 20) accomodating the shaft bearings are of conical shape.

3. Shutoff flap acc. to claims 1 and 2, identified by the fact that the shaft bearings (14) are made of ceramic material, are part of the cast core required for the production of the housing and are cast in together into the housing.

**Revendications**

1. Clapet d'arrêt composé d'un boîtier métallique en une partie (1) dont tout l'intérieur est revêtu d'une couche d'élastomère (13), composé d'un disque à clapet métallique (5) logé de façon centrale et muni d'un revêtement en matière plastique (6), composé d'un arbre moteur (7) en une partie, lequel est enfoncé dans le disque à clapet (5), est en liaison avec le disque à clapet (5) par un raccord d'entraînement (11) et est partiellement entouré par la couche d'élastomère (15) du boîtier, composé d'un palier d'arbre (14, 15) supérieur et inférieur disposé dans le boîtier pour logement de l'arbre moteur (7), caractérisé par le fait que le disque à clapet (5) est formé d'une seule pièce, que la pièce du milieu (8) métallique du disque à clapet (5) est évidée dans le rayon de l'arbre moteur (7), si bien qu'il reste, dans le rayon d'action du disque à clapet (5), deux points d'appui (9, 10) situés l'un en face de l'autre pour le logement de l'arbre moteur, si bien que durant l'opération d'enduction du disque à clapet (5), l'évidement (8) est entièrement rempli de matière plastique (6) et que le boîtier est muni d'ouvertures de passage (17) pour élastomère liquide dans le rayon des deux paliers d'arbre (14, 15), lesquels se déplacent en direction de l'axe de l'arbre moteur (7), de sorte que l'élastomère liquide se répand autour des paliers d'arbre (14, 15) et les enveloppe.

2. Clapet d'arrêt suivant revendication 1 caractérisé par le fait que le côté extérieur des paliers d'arbre (14, 15) accueillant l'arbre moteur, et/ou les alésages de boîtier (18, 20) accueillant les paliers d'arbre, sont de forme conique.

3. Clapet d'arrêt suivant revendications 1 et 2, caractérisé par le fait que les paliers d'arbre (14) sont en céramique, constituent une composante du noyau nécessaire à la fabrication du boîtier et son également coulés dans le boîtier.

FIG. 1

FIG. 2

FIG. 3

0113875

7

FIG.4

FIG.5